# EUROPEAN PATENT APPLICATION

(11) **EP 2 428 610 A1**
(43) Date of publication of application: **14.03.2012**
(21) Application number: 10176411.6
(22) Date of filing: 13.09.2010
(51) Int. Cl.: D21C 9/00, D21H 11/20, D21H 11/22, D21H 17/70, D21H 21/18, C08B 15/08

(54) **Modified cellulose fibres**

(71) Applicant: Södra Skogsägarna ekonomisk förening, 351 89 Växjö (SE)
(72) Inventor: Westman, Gunnar, 438 92, HÄRRYDA (SE); Hasani, Merima, 413 16, GÖTEBORG (SE)
(74) Representative: Jönsson, Anneli

(57) **Abstract**

The present invention relates to modified cellulose fibres comprising cationised cellulose nanocrystals adsorbed on cellulose fibres. The invention relates also to cellulose dispersions comprising the modified cellulose fibres and method for producing the modified cellulose fibres and the cellulose dispersion. The modified cellulose fibres are suitable to be used in paper products wherein the mechanical performance is important.

## Description

### Technical field of the invention

The present invention relates to chemical modification of cellulose fibres. The invention relates modified cellulose fibres comprising cationised cellulose nanocrystals adsorbed thereon; to a cellulose dispersion comprising the modified cellulose fibres; and to a method for producing the modified cellulose fibres and the cellulose dispersion. The modified cellulose fibres are suitable to be used in paper products wherein the mechanical performance is important.

### Background of the invention

Depending on the application of the paper products there are different requirements of the properties of the cellulose components making the final paper product. One of those is the mechanical performance of the paper product and properties like tensile strength and stiffness. The properties may vary with the origin of the cellulose components, but may also be changed by modification by a broad range of methods, by chemical modifying of the cellulose material included, by adding further components to the cellulose material, by selecting a process for producing which promotes modifying specific properties both physical and chemical. Many different ways have been used for improving the material performance of paper products. Examples of such methods are adsorption of polyelectrolytes for example addition of cationic starches, cationic acrylamide polymers, chitosan, carboxy methylcellulose (CMC) by screening negative charge and cationic styrene maleimide copolymers.

A method for producing derivatised microfibrillar polysaccharide is previously described in US 6602994 wherein the polysaccharide has been stabilized by steric and/or electrostatic forces. Derivatised cellulose is described as a suitable polysaccharide for such stabilization. The product obtained by the described method may be used in paper manufacturing for improving properties like stiffness, wet strength, absorbancy, softness, toughness, tear resistance and fold resistance. In paper making machines the derivatised microfibrillar polysaccharide has an effect to improve, for example, the strength of a sheet of paper.

EP 1036799 B1 describes a cellulose dispersion comprising different fractions of cellulose crystal components which result in a dispersion having improved properties. The dispersion has also a high dispersibility and transparency in comparison with water-soluble polymer solutions.

The different chemical methods and modifications of the polymers as are described by the references above may generate structures with modified and improved properties than by the known common methods used. However, there is still a need to improve properties like tensile stiffness of the product, more specifically to improve all the properties related to the tensile stiffness, tensile strength and tensile stretch. When producing paper products like cardboard and corrugated cardboard these properties are interesting and important to consider.

In production of paper products the problem of mechanical properties of the product is presently mainly solved in a more mechanical manner, by layering and arranging materials having different certain properties.

Thus, even if many attempts have been performed to improve these properties there is still a need of creating cellulose fibre structures showing improved mechanical performance like those described above. By modifying the properties as is presented by this invention simplifies the production of paper products having an improved tensile stiffness, tensile strength and tensile stretch.

### Summary of the invention

The present invention is directed to modified cellulose fibres, methods for its production, cellulose dispersions comprising the modified cellulose fibres, methods for its production, and applications for their use.

The object of the invention is modified cellulose fibre comprising cationised cellulose nanocrystals.

There are different methods known to achieve paper products having the desired properties like tensile strength and tensile stiffness of the paper.

An object to the present invention is a modified cellulose fibre wherein the cationised cellulose nanocrystals are adsorbed thereon.

From M Hasani, et al., Journal of Applied Polymer Science, Vol. 114, 1449-1456 (2009) it is known to cationise cellulose fibres originating from cotton cellulose.

The present invention provides a modified cellulose fibre wherein the cellulose fibre have been modified by adsorption of nanocrystals where the electrostatic interaction between the cellulose fibre and the cationised cellulose nanocrystals is utilized to form the modified cellulose fibre of the invention.

In nature, the amount of cellulose differentiate depending on the wood and plant species and their sources. For example in wood the cellulose fibre comprises three main constituents, these are cellulose, hemicelluloses and lignin. The hemicellulose is the source of anionic charges of the cellulose fibre if no other modifications are made.

Also the structure of hemicelluloses varies with the source of the cellulose fibre and by that the amount of anionic charges. In softwood the main hemicelluloses are glucomannans and xylanes while in hardwood the main hemicelluloses are xylanes. Also the amount of hemicelluloses in the cellulose fibres may vary depending on the source of the wood and plant. The hemicellulose may be, in general, around one third of the total amount of the cellulose fibres. Lignin is also an integral component of the cellulose fibre structure with origin from wood. However, in production of chemical paper grade pulp the aim is to reduce the amount lignin and to obtain fibre defibrillation.

The cellulose fibres are anionic charged by nature, mainly depending on the presence of the hemicelluloses. Depending on the origin of the cellulose fibre the content and the structure of the hemicelluloses may differ, and consequently also the amount of anionic charges of the cellulose fibre. The cellulose fibres in plants comprise also components like hemicellulose and lignin. Also amongst the plants the portion of hemicellulose and lignin depend on the source of the plant. In some plants the cellulose fibre may comprise almost pure cellulose.

Therefore, a prerequisite for the electrostatic interaction is the presence of anionic charges on the cellulose fibre. The amount of charges varies with the source of the cellulose fibre.

Therefore, depending on the starting material for the present invention, the cellulose fibres may be pretreated in selected ways to obtain the anionic charge. Therefore, the origin of the cellulose fibres is an important aspect to consider because the amount of anionic charges differs between the plants. Also the method used for the treatment of the cellulose fibre, for example it is known that the sulphite method generates more anionic charges than the sulphate method.

There are also methods known to modify the numbers of anionic charges of the cellulose fibre(s). The amount of anionic charges can be modified by different other means, like methods for bleaching, pulping process and/or chemical modification, and therein, by selecting additives and process parameters etc. as well as the treatment which has been performed.

For the present invention the composition regarding the amount of cellulose and hemicellulose is important, as these components, mainly the hemicelluloses, determine the amount of cationised cellulose nanocrystals to be adsorbed, and by that the improved properties of the final paper product achieved.

According to the present invention cationised cellulose nanocrystals are adsorbed onto the cellulose fibres. Cellulose nanocrystals (CNC) are previously known and also to use them in polymer products, for example, from Xiaodong Cao et al., Biomacromolecules 2007, 8, 899-904 describes to use cellulose nanocrystals to reinforce a polymer matrix of polycaprolactone-based waterborne polyurethane (WPU).

Further, cellulose nanocrystals may be produced by exposing a cellulose pulp in controlled acid hydrolysis and particles having rod like shapes, are obtained. This is described in M Hasani et al, Soft Matter, 2008, 4, 2238-2244. This article further describes methods for cationisation of cellulose nanocrystals by etherification agents. Cellulose nanocrystals having such a three dimensional structure have been found to show advantageously properties as reinforcing fillers in polymer composites. As the cellulose fibres as well as the cellulose nanocrystals are originally anionic but the cationisation of the surface of the cellulose nanocrystals creates objects which may be strongly adsorbed onto the surface of the cellulose surface the modified cellulose fibres according to the present invention are obtained. The reinforcing performance may also be affected by the three dimensional shape of the particles adsorbed upon the cellulose fibre.

The surface cationisation of the cellulose nanocrystals creates and induces an electrostatic adsorption onto the anionic cellulose fibre. The cationised nanocrystals may be produced by exposing the cellulose nanocrystals with cationisation agents and the surface of the cellulose nanocrystals is modified and provided with positive charges. These particles are then adsorbed onto the surface of the cellulose fibre. The opposite charged groups forces the adsorption of the cationised cellulose nanocrystals onto the cellulose fibre. The cationic charges of the cellulose nanocrystals generate interfibrillar bondings when they are adsorbed on the cellulose fibre to create a stiff and strong fibre network.

In the modified cellulose fibres of the invention the cationised cellulose nanocrystals are incorporated within the network of cellulose fibres. The size and shape of the cellulose crystals may have an effect to introduce tensile stiffness and tensile strength. It has been shown by the present invention that the cationised cellulose nanocrystals are advantageously for achieving a very high effect on the paper strength and stiffness.

The cellulose nanocrystal is generally rigid in its nature. According to the present invention it is expected that by incorporating cellulose nanocrystals by adsorption may give an improved performance of the final paper product.

An object of the present invention is a method for producing the modified cellulose fibre and the cellulose dispersion comprising the modified cellulose fibres. The modified cellulose fibres are obtained by the following method according to step a) to step c).

The general method for producing the modified cellulose fibres comprises the steps of:
(a) preparing cellulose nanocrystals;
(b) providing cationised cellulose nanocrystals; and
(c) mixing the cationised cellulose nanocrystals with cellulose pulp.

The method may further comprise step d):
(d) separation of the modified cellulose fibre from the dispersion medium.

The separation of the modified cellulose fibres may be performed by filtering the dispersion, by centrifugation in suitable equipment, filtering with pressure.

The modified cellulose fibre is obtainable by the process according to step a) to step d).

Also, an object of the present invention is a cellulose dispersion comprising the modified cellulose fibres as above in a dispersion medium. The cellulose dispersion may comprise the modified cellulose fibres in a concentration of about 0.05 to 20 % by weight dispersed in the dispersion medium.

The cellulose dispersion may be obtainable by the process according to step a) to step c).

The products obtained by the present invention, hence the modified cellulose fibre and the cellulose dispersion comprising the modified cellulose fibres may be included in the production of different paper products where strong mechanical properties of the final paper product are required.

The E-modulus, tensile strength and tensile stretch achieved in the paper product may depend on different parameters like the starting material, thus the cellulose fibre in the dispersion/suspension; the concentration of the cellulose fibre in the dispersion; and/or the amount of cationised cellulose nanocrystals to be adsorbed.

An object of the invention is also the use of the modified cellulose fibres or the cellulose dispersion comprising the modified cellulose fibres as defined above in a papermaking process.

### Brief description of the figures:

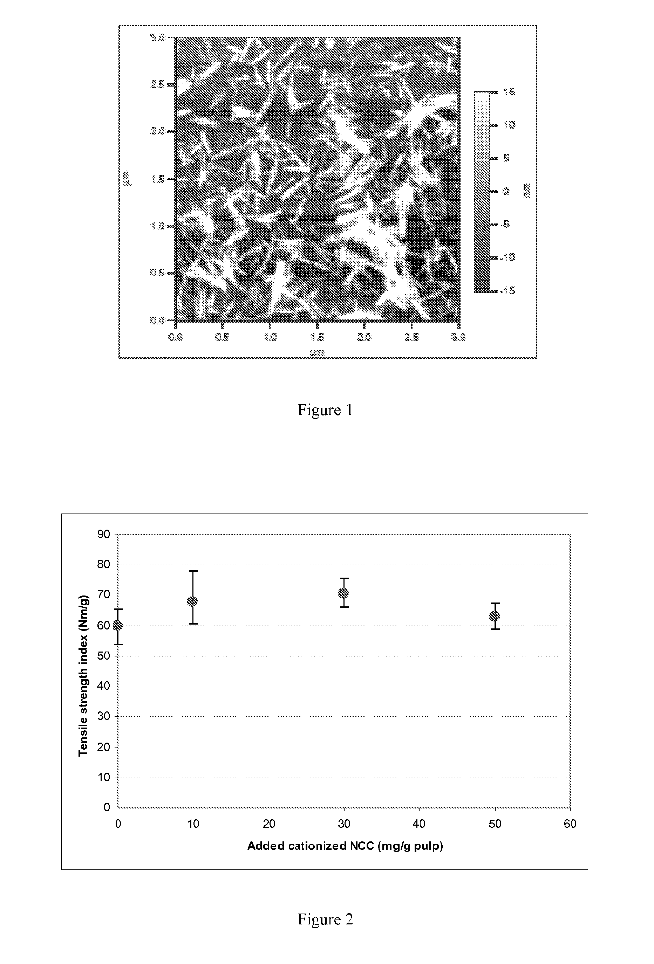

In *Figure 1* are cellulose nanocrystals illustrated by an AFM (Atomic Force Microscope) image. The dimensions of the cellulosic nanocrystals (of cotton linters) are 13± 3 nm x 176 ± 21 nm.
In *Figure 2* is the relation of tensile strength index (Nm/g) vs. added cationised cellulose nanocrystals (mg/g cellulose pulp) presented.
In *Figure 3* is the relation of E-modulus (GPa) vs. added cationised cellulose nanocrystals (mg/g cellulose pulp) presented.

### Detailed description of embodiments of the invention

An object of the invention is modified cellulose fibres comprising cationised cellulose nanocrystals adsorbed thereon.

Another object is the cellulose dispersion comprising the modified cellulose fibres having cationised cellulose nanocrystals adsorbed thereon and dispersion medium.

By the term 'cellulose fibre' it is herein meant any fibre-like cellulosic material having anionic charges. The cellulose may be in mixture with hemicelluloses as the integral part of the fibre. The cellulose fibre may also comprise minor amounts of remaining residues from the plant, like lignin, pectin and minerals. Depending on the origin the cellulose pulp may comprise only cellulose, thus no hemicelluloses is present, such cellulose fibres have been treated by the chemical process methods generally used in papermaking procedures. In these processes anionic charges of the cellulose fibres are created, with differentiated yields depending on the method used. Thus, the cellulose fibres may comprise between about 70 % to 100 % by weight cellulose, for example 75, 80, 85, 90, 95 and 100 % by weight.

By the term "modified cellulose fibre(s)" it is herein meant cellulose fibre(s) comprising cationised cellulose nanocrystals adsorbed on the surface.

The modified cellulose fibre according to the present invention is a cellulose fibre comprising a cationised cellulose nanocrystal adsorbed thereon. The adsorption is the result of electrostatic forces between the cellulose fibre and the cationised cellulose nanocrystals.

The starting material for producing the modified cellulose is a dispersion of cellulose, may also be named cellulose pulp, including any kind of cellulose fibre(s). The cellulose pulp may be obtained by, when starting from softwood or hardwood, treatment by different methods, for example by the sulphate method, the sulphite method, the soda process. The list of methods is not exhaustive.

The modified cellulose fibre(s) may contain the cationised cellulose nanocrystal in a concentration of about 1 to 5 % by weight of cationised cellulose nanocrystals. For example the modified cellulose may comprise about 2 to 5 % by weight of cationised cellulose nanocrystals; or about 3 to 4 % by weight of cationised cellulose nanocrystals; or about 2.5 to 3.5 % by weight of cationised cellulose nanocrystals. Examples are 2.5, 2.75, 3, 3.25, 3.5, 3.75, 4, 4.25, 4.5, 4.75, 5 % by weight of cationised cellulose nanocrystals.

By the term 'cationised cellulose nanocrystal' it is herein meant cellulose nanocrystal having been cationised with a cationisation agent.

By the term 'degree of substitution' (DS) it is herein meant the average number of cationic substitution per glucose monomer included in the cellulose chain. The degree of substitution of the cellulose nanocrystal is preferably lower than 0.5. If higher degree of substitution, the cellulose nanocrystals tends to be soluble in a water solution.

To achieve the properties of tensile strength and tensile stiffness the degree of substitution (DS) is preferably between 0.001 to 0.5. The cationised cellulose nanocrystals have a degree of substitution (DS) of about 0.01 to about 0.2. The degree of substitution is preferably between about 0.05 to about 0.2.

The level of cationisation or degree of substitution may be measured by methods like Z-potential, conductrometric titration, and elementary analysis.

It is previously known to cationise cellulose by M Hasani, et al., Journal of Applied Polymer Science, Vol. 114, 1449-1456 (2009).

However, when using the cellulose nanocrystals together with cellulose fibre(s) according to the invention, a modified cellulose fibre showing improved physical properties like tensile strength and E-modulus is obtained.

In one embodiment of the invention the modified cellulose fibres comprise cationised cellulose nanocrystals of formula (I)

CNC-O-M-Z⁺X- [Formula I]

wherein
M represents the linker between the cellulose nanocrystal and the cationisation moiety,
M represents
linear or branched C₁ -C₁₂ alkyl, optionally substituted by oxo, -OH, -N(R₁ₐ)(R_{1b}), halo, linear or branched C₁ -C₆ alkoxy,
R₁ₐ, R_{1b} independently represent H, linear or branched C₁ -C₄ alkyl, optionally substituted with one or more of - Wₐ-R₂, -OH;
R₂ represents linear or branched C₁ -C₄ alkyl;
Wₐ represents O, N, or S;

Z represents -N(R₃ₐ)(R_{3b}), -N(R₃ₐ)(R_{3b})(R_{3c}), N-containing heteroaryl;
R₃ₐ, R_{3b}, R_{3c} independently represent linear, branched C₁ -C₄ alkyl, optionally substituted with one or more selected from OXO, - W_{b} -R₄, -OH;
R₃ₐ, R_{3b}, R_{3c} may together form three to seven membered ring, including heteroatoms selected from O, N, S, wherein the N and S may optionally be substituted with linear or branched C₁-C₆ alkyl; - W_{b} -R₅, S which may be oxidized to S(O)ₖ;
R₄ represents linear or branched C₁ -C₄ alkyl;
R₅ represents linear or branched C₁ -C₄ alkyl;
k represents 1 or 2;
W_{b} represents O, N, or S;

N-containing heteroaryl represents five to fourteen-membered unsaturated heterocyclic groups containing one or more nitrogen, which heterocyclic group is optionally substituted by one or more substituents selected from oxo, hydroxy, cyano, halo, nitro, C₁-C₆ alkyl, C₁-C₆ alkoxy, aryl, aryloxy, -N(R₆ₐ) R_{6b}, -C(O) R_{6c}, -C(O)O R_{6d}, -C(O) N(R₆ₐ) R_{6b}, -N(R₆ₑ)C(O) R_{6c}, and - N(R_{6f})S(O)₂ R₆g.
R₆ₐ to R₆g independently represent H, C₁-C₆ alkyl, aryl;
aryl represents phenyl or naphtyl, optionally substituted with hydroxy, halo;
X represents a counter ion; and
CNC denotes cellulose nanocrystal.

In one embodiment the modified cellulose fibres comprise cationised cellulose according to Formula I above wherein
M represents
linear, branched C₁ -C₆ alkyl, optionally substituted by ;
-(C(O)-(C(R₇ₐ)(R_{7b}))ₙ)-; or
-((C(R₈ₐ)(R_{8b}))-(C(R₈a)(R_{8d}))-(C(R₈ₐ)(R_{8b}))n-(W-(C(R₈ₐ)(R_{8b}))ₙ)ₘ)- ;
R₇ₐ,R_{7b} independently represent H, linear, branched C₁ -C₄ alkyl, optionally substituted with one or more of -W-R_{7c}, -OH;
R_{7c} represents linear or branched C₁ -C₄ alkyl;
R₈ₐ,R_{8b} represent H, linear, branched C₁ -C₄ alkyl, optionally substituted with one or more of-Wₐ-R_{8c}, -OH;
R_{8c} represents linear or branched C₁ -C₄ alkyl;
R_{8d} represents -OH, -NH₂;
W represents O;
Wₐ represents O, N, or S;
n represents 1, 2, 3, 4, 5 or 6; and
m represents 0, 1, 2, 3 or 4.

In one the modified cellulose fibres comprise cationised crystalline cellulose according to Formula I above wherein
M represents
-(C(O)-(C(R₇ₐ)(R_{7b}))ₙ)-;

-((C(R₈ₐ)(R_{8b}))-(C(R₈ₐ)(R_{8d}))-(C(R₈ₐ)(R_{8b}))ₙ)-(W-(C(R₈ₐ)(R_{8b}))ₙ)ₘ)- ;
R₇ₐ,R_{7b} independently represent H, linear, branched C₁ -C₄ alkyl, optionally substituted with one or more of -Wₐ-R_{7c}, -OH;
R_{7c} represents linear or branched C₁ -C₄ alkyl;
R₈ₐ,R_{8b} represent H, linear, branched C₁ -C₄ alkyl, optionally substituted with one or more of -Wₐ-R_{8c}, -OH;
R_{8c} represents linear or branched C₁ -C₄ alkyl;
R_{8d} represents -OH, -NH₂;
W represents O;
Wₐ represents O, N, or S.

In one embodiment the modified cellulose fibres comprise cationised crystalline cellulose according to Formula I above wherein
M represents
-( C(O)-(C(R₇ₐ)(R_{7b}))ₙ)-;
R₇ₐ,R_{7b} independently represent H, linear, branched C₁ -C₄ alkyl, optionally substituted with one or more of -Wₐ-R_{7c}, -OH;
R_{7c} represents linear or branched C₁ -C₄ alkyl;
Wₐ represents O, N, or S; and
n represents 1, 2, 3, 4, 5, or 6.

In one embodiment the modified cellulose fibres comprise cationised crystalline cellulose according to Formula I above wherein

M represents
-(C(O)-(C(R₇ₐ)(R_{7b}))ₙ)-;
R₇ₐ,R_{7b} independently represent H;
and n represents 1.

In one embodiment the modified cellulose fibres comprise cationised crystalline cellulose according to Formula I above wherein M represents
-((C(R₈ₐ)(R_{8b}))-(C(R₈ₐ)(R_{8d}))-(C(R₈ₐ)(R_{8b}))ₙ-(W-(C(R₈ₐ)(R_{8b}))ₙ)ₘ)-;
R₈ₐ,R_{8b} independently represent H, linear, branched C₁ -C₄ alkyl, optionally substituted with one or more of-Wₐ-R_{8c,} -OH;
R_{8c} represents linear or branched C₁ -C₄ alkyl;
R_{8d} represents -OH, -NH₂;
W represents O;
Wₐ represents O, N, or S; and
n represents 1, 2, 3, 4, 5, or 6.

In one embodiment the modified cellulose fibres comprise cationised crystalline cellulose according to Formula I above wherein
M represents
-((C(R₈ₐ)(R_{8b}))-(C(R₈ₐ)(R_{8d}))-(C(R₈ₐ)(R_{8b}))ₙ-(W-(C(R₈ₐ)(R_{8b}))ₙ)ₘ)-;
R₈ₐ,R_{8b} independently represent H;
R_{8d} represents -OH;
W represents O;
n is 1; and
m is 0.

In one the modified cellulose fibres comprise cationised crystalline cellulose according to Formula la

CNC-O-C(O)-(CH₂)-Z⁺X⁻ [Formula la]

wherein
Z represents -N(R₃,)(R_{3b})(R_{3c}), N-containing heteroaryl;
R₃ₐ, R_{3b}, R_{3c} independently represent linear, branched C₁ -C₄ alkyl, optionally substituted with one or more of -W_{b}-R₄, -OH;
R₃ₐ, R_{3b}, R_{3c} may together form C₃-C₇ cyclic ring;
R₄ represents linear or branched C₁ -C₄ alkyl;
W_{b} represents O, N, or S; and
X represents a counter ion.

In one embodiment the modified cellulose fibres comprise cationised cellulose nanocrystals according to Formula Ib

CNC-O-(CH₂)-(CHOH)-(CH₂)- Z⁺X⁻ [Formula Ib]

wherein
Z represents -N(R₃,)(R_{3b})(R_{3c}), N-containing heteroaryl;
R₃ₐ, R_{3b}, R_{3c} independently represent linear, branched C₁ -C₄ alkyl, optionally substituted with one or more of -W_{b}-R₄, -OH;
R₃ₐ, R_{3b}, R_{3c} may together form C₃-C₇ cyclic ring;
R₄ represents linear or branched C₁ -C₄ alkyl;
W_{b} represents O, N, or S;
N-containing heteroaryl represent five-to-twelwe-membered unsaturated heterocyclic groups containing one or more nitrogen, which heterocyclic group is optionally substituted by one or more substituents selected from oxo,hydroxy, cyano, halo, nitro, C₁-C₆ alkyl, C₁-C₆ alkoxy, aryl, aryloxy, - N(R₆ₐ) R_{6b}, -C(O)R_{6c}, -C(O)OR_{6d}, -C(O)N(R₆ₐ) R_{6b}, -N(R₆ₑ)C(O)R_{6c}, and - N(R_{6f})S(O)₂R_{6g}.
R₆ₐ to R_{6g} independently represent H, C₁-C₆ alkyl, or aryl;
aryl represents phenyl, naphtyl;
X represents a counter ion; and
CNC denotes the cellulose nanocrystal.

In one embodiment the modified cellulose fibres defined above comprise cationised cellulose nanocrystals according to Formula I wherein Z represents -N(R₃ₐ)(R_{3b})(R₃ₑ);
R₃ₐ, R_{3b}, R_{3c} independently represent linear, branched C₁ -C₄ alkyl, optionally substituted with one or more of -W_{b}-R₄, -OH;
R₃ₐ, R_{3b}, R_{3c} may together form C₃-C₇ cyclic ring;
R₄ represents linear or branched C₁ -C₄ alkyl;
W_{b} represents O, N, or S.

Z may be selected from the group of trialkylammonium. Examples of such trialkyammoium groups trimethylammonium, (methyl)(diethyl)ammonium, (dimethyl)(ethyl)ammonium, (dimethyl)(isopropyl)ammonium.

In one embodiment the modified cellulose fibres comprise cationised cellulose nanocrystals according to Formula I wherein Z represents a N-containing heteroaryl represent five-to-fourteen -membered unsaturated heterocyclic groups containing one or more nitrogen, which heterocyclic group is optionally substituted by one or more substituents selected from oxo, OH, cyano, halo, nitro, C₁-C₆ alkyl, C₁-C₆ alkoxy, aryl, aryloxy, -N(R₆ₐ)R_{6b}, -C(O)R_{6c}, - C(O)OR_{6d}, -C(O)N(R₆ₐ)R_{6b}, -N(R₆ₑ)C(O)R_{6c}, and -N(R_{6f})S(O)₂R_{6g}. R₆ₐ to R_{6g} independently represent H, C₁-C₆ alkyl, aryl; and aryl represents phenyl, naphtyl.

By the terms 'C₁-C₁₂ alkyl', 'C₁-C₈ alkyl', 'C₁-C₆ alkyl', 'C₁-C₅ alkyl' or 'C₁-C₄ alkyl' it is meant linear or branched alkyl chains, if not otherwise is specified. The alkyl may optionally be substituted. Examples of C₁-Cₗ₂ alkyl are C₁-C₈ alkyl; C₁-C₆ alkyl C₁-C₅ alkyl or C₁-C₄ alkyl. More specific examples are methyl, ethyl, n-propyl, isopropyl, n-butyl, isobutyl, tert-butyl, n-pentyl, isopentyl and n-hexyl.

By the terms 'C₁-C₁₂ alkoxy', 'C₁-C₈ alkoxy', 'C₁-C₆ alkoxy', 'C₁-C₅ alkoxy' or 'C₁-C₄ alkoxy' it is meant linear or branched alkoxy chains, if not otherwise is specified. The alkoxy may optionally be substituted. Examples of the alkoxy groups are methoxy, ethoxy, n-propoxy, isopropoxy, n-butyloxy, isobutyloxy, tert-butyloxy, n-pentyloxy, iso-pentyloxy and n-hexyloxy.

By the term 'aryl' it is herein meant unsaturated five to ten membered aromatic groups. Examples of aryl are phenyl and naphtyl.

By the term 'halo' it is meant the halogen atoms iodo (I), bromo (Br) and chloro (Cl) if not further specified.

Examples of N-containing heteroaryls representing five-to-fourteen-membered unsaturated heterocyclic groups are pyridine, pyrrole, indole, imidazole, quinoline, methyl piperidine, methyl pyrrolidine. The list of heterocyclic groups is not exhaustive. Preferably, Z is selected from pyridine, pyrrolidine, imidazole.

### The cellulose nanocrystals, the CNCs.

Cellulose nanocrystals are often denoted with the abbreviation 'CNC', and are also named cellulose whiskers and cellulose nanorods.

There are different methods available for preparing the cellulose nanocrystals. For example, the cellulose nanocrystals may be produced by controlled acid hydrolysis of the cellulose.

Hydrolysis to create the cellulose nanocrystals are preferably performed on native cellulose. Native cellulose has a crystalline structure which is prerequisite for forming the nanocrystals. The structure of native cellulose is also commonly called Cellulose I. The source of native cellulose may be softwood cellulose, hardwood cellulose, annual plants like cotton, flax, jute and tunicate are all suitable for forming the cellulose nanocrystals.

When the cellulose fibres originate from wood the process for producing the starting material for the present invention may include a step of delignification. Presence of lignin in higher amounts prohibits the formation of the nanocrystals. Therefore it is, dependant on the source of cellulose for producing the cellulose nanocrystals, important to reduce the amount of lignin present and keep the amount of lignin to lower amounts. To form the starting wood fibre (containing lignin) it must most often be treated in a process to reduce the content of lignin, for example in a process for forming the nanocrystals, the cellulose fibres may be treated by the so called sulphate process, sulphite process or a soda process. Another option is by cellulose thermomechanical preparation (CTMP). These processes are all well-known within the field. During these processes the different components, such as cellulose, hemicelluloses and lignin are separated from each other and the amount of lignin may be reduced. During these processes also the cellulose fibres are released and the charges on the surface of the cellulose fibre and within the cellulose fibre are made available for interfibrillar bondings. When manufacturing the cellulose nanocrystals by controlled hydrolysis cellulose, thus treatment with strong acids, nanocrystals having a suitable rod-like shape of are obtained.

The rods may have a size of, in average, from 1 to 60 nm in diameter, and length of 50 to 5000 nm. For example, the rods may have a size of, in average, from 1 to 15 nm in diameter, and a length of, in average, from 50 to 1000 nm. For example, the size of the rods is about 3 to about 15 nm in diameter in average, and a length of about 50 to 500 nm, or of about 3 to 5 nm in diameter and of a length of about 100 to 200 nm.

The cellulose nanocrystals obtained by the controlled acid hydrolysis of the cellulose are highly crystalline. Preferably, the cellulose nanocrystals show a crystallinity of substantively 100 %. The crystallinity may be measured with known methods like X-ray measurements. Examples are wide angle X-ray scattering, WAXS, small angle X-ray scattering, SAXS. The crystalline structure parts of the cellulose nanocrystals are mixed with parts of amorphous, or partly amorphous structure.

A method for preparation of cellulose nanocrystals is described in Soft matter, 2008, 4, 2238-2244. Also a method for modifiying the surface charge by cationisation of the cellulose nanocrystals is described therein. The cationisation is obtained by reaction between the cellulose nanocrystal and 2,3-epoxipropyltrimethylammonium chloride (EPTMAC) resulting in cellulose nanocrystals having cationic hydroxypropyl-trimethylammonium chloride (HPTMAC-CNC) substituents on the surface. This method is described as Method I herein.

The cationisation of the cellulose nanocrystals creates polyelectrolytes. This cellulose crystal structures have a substantial portion of ionic and ionizable groups. The cationised cellulose nanocrystals are therefore interesting structures to apply on cellulose pulp fibres to improve properties like fiber stiffness, etc.

### The cellulose dispersion

An aspect of the present invention is a cellulose dispersion/suspension comprising the cellulose fibres modified by cationised cellulose nanocrystal, thus a cellulose pulp dispersion wherein the cellulose fibres have been modified by the cationised cellulose nanocrystals.

The cellulose dispersion of the invention is produced by mixing the cellulose pulp comprising the cellulose fibre with the cationised cellulose nanocrystals.

The method for producing the cellulose dispersion results in cationised cellulose nanocrystals are adsorbed onto the cellulose fibres in the cellulose pulp. The method for producing is suitably performed during mixing, which can be performed by stirring, sonication or other suitable procedures or processes.

The starting material, the cellulose pulp forming the cellulose dispersion/suspension may originate from softwood pulp and hardwood pulp. The cellulose may be a so called 'kraft pulp', a cellulose pulp which has been treated in alkali. The cellulose pulp comprises the cellulose fibres to be modified by the cationised cellulose nanocrystals in a dispersion medium. The cellulose pulp comprises the cellulose fibres in about 0.05 to about 20 % by weight, for example in an amount of between in about 0.05 to about 15 % by weight, or about 0.10 to 15 % by weight; or about 0.10 to about 10 % by weight. Other examples of concentration of the cellulose fibres are: about 1, 2, 3, 4, 5, 6, 7, 8, 9, 10, 11, 12, 13, 14 or about 15 % by weight.

The cellulose fibres in the cellulose pulp are dispersed in a dispersion medium. The dispersion medium may be selected from water, water miscible solvents and mixtures thereof. Examples of water miscible solvents are lower alcohols like methanol, ethanol, isopropanol, acetone, or ethylacetate. The list of water miscible solvents is not exhaustive.

The dispersion medium may be a mixture of water and the water miscible, and comprises for example the water and the water miscible solvent in the following ratios: 50:50; 60:40; 70:30; 80:20; 90:10; 91:9; 92:8, 93:7, 94:6, 95:5, 96:4, 97:3, 98:2, 99:1.

The anionic charges of the cellulose fibre in the cellulose pulp may be measured before the preparation of the modified cellulose fibre(s), for example as surface charges or of the total amount of charges of the cellulose fibre.

To optimize the process to produce the modified cellulose fibre, or the cellulose dispersion comprising the modified cellulose fibre, it is important to determine the amount of anionic charges of the cellulose fibre in the cellulose pulp being the starting material. Another parameter to be determined is the degree of substitution (DS) of the cellulose nanocrystals, thus the amount of cationic charges of the nanocrystals to be added to modify the cellulose fibre.

In one embodiment of the invention the cellulose dispersion according to the invention comprises the modified cellulose fibres as are defined above.

The cellulose dispersion comprises modified cellulose fibres with cationised cellulose nanocrystals adsorbed thereon. The cellulose dispersion may comprise about 1 to 50 mg adsorbed cationised cellulose nanocrystals per g pulp. For example the cellulose dispersion comprises about 10 to 50 mg adsorbed cationised cellulose nanocrystals per g pulp, like about 10, 15, 20, 25, 30, 35, 40, 45, or about 50 adsorbed cationised cellulose nanocrystals per g pulp.

Further, the cellulose dispersion according to present invention comprises modified cellulose fibres comprising the cellulose nanocrystals according to formula I above.

The cellulose fibers have anionic charges on its surface, the more anionic charges on the surface of the fibres, the more cationised cellulose can be adsorbed on the surface of the cellulose fibre. Optionally, additional charges can be introduced on the surface by careful selection of process for manufacturing.

The anionic charges can be estimated by measuring the Z-potential. This procedure is further described in Example 3.

The modified cellulose fibres according to the invention may preferably comprise 1 - 50 mg adsorbed cationised cellulose nanocrystals per g cellulose pulp, for example
between 1-30 mg /g cellulose pulp; 5-35 mg /g cellulose pulp.

### Method for producing modified cellulose fibre and cellulose dispersion

In one embodiment the method for producing the cellulose dispersion comprising the modified cellulose fibre according to the present invention comprises the following steps:
(a) preparing of cellulose nanocrystal(s);
(b) providing cationised cellulose nanocrystals of the cellulose nanocrystals obtained in step a) by reacting the cellulose nanocrystals with a cationisation agent in the presence of a base;
(c) mixing the cationised cellulose nanocrystals with cellulose pulp; and optionally
(d) separating the modified cellulose fibres.

There are different methods for producing the modified cellulose fibres depending on the cationisation agent. Two principles are described in more detail below, where the linker denoted M is connected to the crystalline nanocrystal in different ways, according to Method I and Method II.

In step a), the preparing of the cellulose nanocrystal(s) the cellulose pulps, the starting material is treated by acid hydrolysis, thus treatment with strong acids. The controlled acid hydrolysis may be performed with strong acids like, for example, sulfuric acid (H₂SO₄) or hydrochloric acid (HCl). The concentration of the acid used may be between 50 to 90 % (w/w), or for example between 55 to 70 % (w/w), for example between 60 to 65 % (w/w), such as 61, 62, 63 and 64 % (w/w). The reaction is preferably performed at a temperature between about 40 °C to about 75° C, for example at about 45 °C, 50 °C, 55 °C, 60 °C, 65 °C, 70 °C, or 72 °C. The time for reaction may vary widely, may be performed during from 20 minutes up to 5-6 hours.

In the process as described above, preferably, the cellulose pulp obtained in step c) comprises 2- 5 % by weight of cellulose fibres, for example about 2.5 to about 3.5 % by weight.

In step (b) are cationised cellulose nanocrystals of the cellulose nanocrystals obtained in step a) provided. The cellulose nanocrystals are reacted with a cationisation agent (Y) as is described below. The reaction is preferably performed in the presence of a base. The base may be selected from alkali hydroxides, for example selected from sodium hydroxide (NaOH), potassium hydroxide (KOH). The base may also be selected from alkali earth hydroxide, for example calcium hydroxide (Ca(OH)₂).

In step (c) the cationised cellulose nanocrystals obtained in steb b) are mixed with cellulose fibres present in a cellulose pulp. During this process step the cationised cellulose nanocrystas are adsorbed onto the cellulose fibres. The amount of cationised cellulose nanocrystals adsorbed may be limited by the amount of anionic charges of the cellulose fibres.

Step (d) is an optionally step, wherein the modified cellulose fibres is separated from the dispersion medium.

The cationisation of the cellulose nanocrystals can be quantified by different known methods, for example by titration of counter-ions, for example with silver nitrate (AgNO₃), or by elementary analysis. The degree of substitution, thus the amount of cationic charges, determines the amount of cationised cellulose nanocrystals to be added to the cellulose fibres.

The cationised cellulose nanocrystals may have a degree of substitution (DS) of between about 0.01 to about 0.2, for example between about 0.05 to about 0.2.

Depending on the process for manufacturing the modified cellulose fibre the time for reaction differs, and by that also the amount of base required in the process. The longer time for reaction the less amount of base is required.

The cellulose nanocrystals from step (a) for the present invention may be modified by cationisation with cationisation agents according to step (b). The cationisation may be performed by the reaction between the hydroxygroups placed on the cellulose nanocrystal (CNC) and the compound of formula I . The cationisation of the cellulose nanocrystal to form the cationised cellulose nanocrystal according to the following general reaction scheme:

CNC-OH + Y⁺X⁻ → CNC-O-Y⁺X⁻

wherein CNC-OH denotes the cellulose nanocrystal before the cationisation; Y denotes the "cationisation agent"; and
CNC-O-Y⁺X⁻ denotes the cationised cellulose nanocrystal.

There are different methods for cationisation of cellulose available where the cationisation agent is substituted to the cellulose backbone of the cellulose nanocrystals.

One example of cationisation includes a cationisation agent having a quarternary nitrogen structure.

In one method the reaction is performed according to the following scheme (Method I):

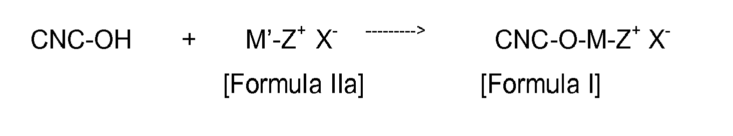

In one method the quaternary nitrogen moiety (represented by Z) is substituted to the linker M' before coupling to the cellulose nanocrystal.

In the general scheme above Y is defined as M'-Z+ wherein:
M' represents
linear, branched or cyclic ω-epoxy-C₁ -C₁₀ alkyl, optionally substituted by oxo, OH, -N(R₁ₐ)(R_{1b}), halo (Cl, I, Br), linear or branched C₁ -C₆ alkoxy,
R₁ₐ, R_{1b} independently represent H, linear or branched C₁ -C₄ alkyl, optionally substituted with one or more of -Wₐ-R₂, -OH;
R₂ represents linear or branched C₁ -C₄ alkyl;
Wₐ represents O, N, or S;
Z represents -N(R₃ₐ)(R_{3b}), -N(R₃ₐ)(R_{3b})(R_{3c}), N-containing heteroaryl;
R₃ₐ, R_{3b}, R_{3c} independently represent linear, branched C₁ -C₄ alkyl, optionally substituted with one or more selected from OXO, -W_{b}-R₄, -OH;
R₃ₐ, R_{3b}, R_{3c} may together form three to seven membered ring, including heteroatoms selected from O, N, S, wherein the N and S may optionally be substituted with linear or branched Cₗ-C₆ alkyl; -W_{b}-R₅, S may be oxidized to S(O)ₖ
R₄ represents linear or branched C₁ -C₄ alkyl;
R₅ represents linear or branched C₁ -C₄ alkyl;
k represents 1 or 2;
W_{b} represents O, N, or S;
N-containing heteroaryl represents five to fourteen-membered unsaturated heterocyclic groups containing one or more nitrogen, which heterocyclic group is optionally substituted by one or more substituents selected from oxo, hydroxy, cyano, halo, nitro, C₁-C₆ alkyl, C₁-C₆ alkoxy, aryl, aryloxy, -N(R₆ₐ) R_{6b}, -C(O)R_{6c}, -C(O)OR_{6d}, -C(O)N(R₆ₐ)R_{6b}, -N(R₆ₑ)C(O)R_{6c}, and - N(R_{6f})S(O)₂R_{6g}.
R₆ₐ to R_{6g} independently represent H, C₁-C₆ alkyl, aryl;
aryl represents phenyl or naphtyl, optionally substituted with hydroxy, halo.
X is a counter ion, for example Cl⁻.

In one aspect of the present invention the cationisation of the cellulose nanocrystal is by substitution by etherification of the hydroxy-groups on the cellulose nanocrystal.

The surface cationisation of the cellulose nanocrystals according to the method above, proceeds by a nucleophilic addition of the alkali activated cellulose when using a cationisation agent according to formula II the reaction.

Examples of compounds of formula IIa are generally, forms of 2,3-epoxy(C₁-C₆ alkyl) trimethylammoniumchloride. Preferably the M'-Z is 2,3-epoxipropyltrimethylammonium chloride (hereinafter denoted EPTMAC). Another example is N-oxiranylmethy-N-methylmorpholinium chloride (hereinafter denoted NMM).

Another option for the cationisation follows the general procedure described below (Method II). In Method II, step 1) the linker M" is reacted to the cellulose nanocrystal in step 1). In the following step (step 2)) the quarternary nitrogen Z is then reacted with the linker M".

### Step 1)

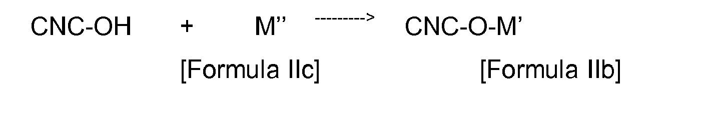

### Step 2)

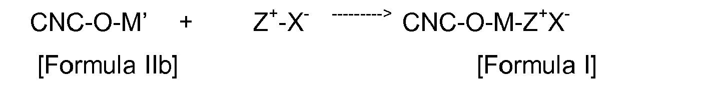

wherein
M" represents
linear, branched or cyclic L-1-C(O)-(C₁ -C₁₂ alkyl)-R₉ₐ substituted by optionally substituted by oxo, OH, -N(R₁ₐ)(R_{1b}), I, Br, linear or branched C₁ - C₆ alkoxy,
wherein
L represents a leaving group;
R₁ₐ, R_{1b} represent H, linear or branched C₁ -C₄ alkyl, optionally substituted with one or more of -Wₐ-R₂, -OH;
R₂ represents linear or branched C₁ -C₄ alkyl;
Wₐ represents O, N, and S;
R₉ₐ represents a halo, R_{9b}-C(O)OH;
R_{9b} is selected from linear, branched or cyclic C1-C6 alkyl;
X represents a counter ion; and
Z is as defined above.

Herein X represents a counter ion. Examples of counter ions to be used are chloride (Cl⁻) and hydroxide (OH).

L represents a leaving group. Examples of leaving groups suitable for the reaction are Cl, Br, I, tosylate, mesylate.

In one embodiment M" represents of formula IId:

L-(C(O)-(C(R₇ₐ)(R_{7b}))ₙ)-(R^{a}); [Formula IId]

wherein
R₇ₐ,R_{7b} independently represent H, linear, branched C₁ -C₄ alkyl, optionally substituted with one or more of -Wₐ-R_{7c}, -OH;
R_{7c} represents linear or branched C₁ -C₄ alkyl;
Wₐ represents O, N, and S;
n represents 1, 2, 3, 4, 5 or 6; and
L represents a leaving group.

In one embodiment of the invention the process for producing the modified cellulose fibre(s) and the cellulose dispersion follows the process defined as Method I above and comprises the following steps:
(a) preparing of cellulose nanocrystal(s);
(b) providing cationised cellulose nanocrystals of formula I

   CNC-O-M-Z⁺X⁻

   by reacting the cellulose nanocrystals with compound of formula IIa

   M'-Z⁺X⁻,

   in the presence of a base;
(c) mixing the cationised cellulose nanocrystals with cellulose pulp;
   and optionally
(d) separating the dispersion medium from the cellulose pulp obtained in step (c);
wherein the compound of formula I and compound of formula IIa are as defined above.

In one embodiment of the invention the process for producing the modified cellulose fibre and the cellulose dispersion follows the process defined as Method II above and comprises the following steps:
(a) preparing of cellulose nanocrystal(s);
(b) providing cationised cellulose nanocrystals of formula I

   CNC-O-M-Z⁺X⁻

   by reacting the cellulose nanocrystals with compound of formula IIb

   CNC-O- M' (formula IIb),

   which then is reacted with Z⁺-X⁻, in the presence of a base;
   to obtain the cationised cellulose nanocrystals according o formula I;
(c) mixing the cationised cellulose nanocrystals with cellulose pulp; and optionally
(d) separating the dispersion medium from the cellulose pulp obtained in step (c),
wherein the compound of formula I and compound of formula IIb are as defined above.

The following examples indicate various possible methods for producing the cationised cellulose crystals, to adsorb it on the cellulose fibre(s) and to form the final paper product. The examples are only illustrative, and are not construed as limiting the present invention to any particular compounds, processes, or conditions.

### Examples

### Example 1 - Preparation of cellulose nanocrystals (CNCs)

A suspension of cellulose nanocrystals (CNC) was prepared by mixing 40 g of dried pulp, approximatively fibre length of 2.0 mm, with 700 mL of acid (64% w/w sulfuric acid (Sigma)) at 45°C and then constant stirring for 45 minutes. After 45 min the suspension was diluted 1 0-fold with purified water to quench the reaction. The suspension was centrifuged at 6000 rpm (revolutions per minute) for 10 minutes to concentrate the cellulose and to remove excess water and acid. The precipitate was rinsed, re-centrifuged and dialyzed against purified water for 10 days until constant neutral pH was achieved in the effluent. The suspension was sonicated (Vibracell Sonicator) while cooling in an ice bath to create cellulose crystals of colloidal dimensions (such as 1 to 1000 nm).

### Example 2 - Cationisation of CNC

### Example 2a - cationisation of CNC with EPTMAC

Concentrated NaOH(aq) was added to a suspension of cellulose nanocrystals (CNC) (5.5% w/w) (prepared according to Example 1) until a concentration of 1.6 M NaOH was obtained. After 30 minutes stirring at room temperature (20 °C), 2,3-epoxy propyl trimethylammonium dichloride (EPTMAC) (1 equivalent/cellulose hydroxyl group) was added and the mixture was stirred for 5 hours at 65°C. After 5 hours, the reaction mixture was diluted 5-fold with water and dialyzed (cellulose dialysis membranes, molecular weight cut-off of 12 000-14 000 Da from Spectrum Labs) against purified water for 15 days. The resulting suspension of hydroxypropyltrimethylammonium chloride cellulose nanocrystals (HPTMAC-CNC) approximately 1% w/w, was sonicated. The concentration of the suspension was increased by evaporation at reduced pressure and room temperature (about 20 °C).

The cation content of HPTMAC-CNC was determined by conductometric titration of chloride counterions with AgNO₃. The cation content of HPTMAC-CNC was found to be 0.300 mmol/g which corresponds to degree of substitution (DS) of 0.05 per anhydroglucose unit (AGU).

### Example 2b - cationisation of CNC by action of chloroacetyl chloride and tertiary amine

Dry cellulose nanocrystals (500 mg) were dispersed in 10 ml DMSO (dimethyl sulfoxide) by sonicating suspension (Vibracell Sonicator) at 65 % output for 1 minute.

Chloroacetyl chloride (6 equiv /AGU) was added dropwise and the reaction mixture was stirred at room temperature.

After 2 h the tertiary amine N-methyl morpholine was added (15 equivalents/AGU) and the stirring at room temperature was continued.

After 24 h, distilled water (approximately 20 ml) was added and the obtained cationized cellulose nanocrystals were purified by dialysis against water.

The procedure according to Example 2b was repeated with the following tertiary amines:
Example 2c: pyridine, (degree of substitution (DS) of 0.13 per anhydroglucose unit (AGU))
Example 2d: quinoline, (degree of substitution (DS) of 0.12 per anhydroglucose unit (AGU))
Example 2e: methyl piperidine, (degree of substitution (DS) of 0.18 per anhydroglucose unit (AGU)).

### Example 3 - Modification of bleached kraft pulp by adsorption of cationised CNC.

Cellulose pulp (never dried bleached kraft pulp, approximatively fibre length 2.6 mm, beaten for 4000 revolutions, with PFI-mill) was suspended in water to concentration 50 g/dm3 (Dispersion A).

HPTMAC-CNC, obtained from Example 2a, was suspended in 1 L to obtain the following concentrations (Dispersion B):
Example 3 (a): 0.5 g/L,
Example 3 (b): 1.5 g/L,
Example 3 (c): 2.5 g/L
Example 3 (d): 0.0 g/L (Reference sample)

The two suspensions (Dispersion A and B) were combined to obtain the following concentration of HPTMAC-CNC (mg/g pulp):
Example 3 (a): 10,
Example 3 (b): 30,
Example 3 (c): 50,
Example 3 (d): 0.

The suspension obtained was shaken at room temperature (20 °C) for 150 minutes. The dispersion medium (water) was then separated by filtration from the obtained cellulose dispersion. The modified cellulose fibres were obtained.

### Adsorption study

The absorption potential of the HPTMAC-CNC on the cellulose fibre was estimated.

An adsorption isotherm was created by measuring the chemical oxygen demand (COD) of the remaining filtrate after adsorption.

10 ml of 50 g/dm³ aqueous pulp suspension was combined with 10 ml of aqueous HPTMAC-CNC suspensions wherein the concentration of HPTMAC-CNC varied.

10 ml of cellulose pulp dispersion having the concentration of 50 g/dm³ of cellulose pulp dispersion (aqueous) was combined/mixed with 10 ml of aqueous HPTMAC-CNC suspensions. The initial concentrations of CNCs varied between 10 mg/g to 80 mg/g cellulose pulp.

The mixture obtained were shaken at room temperature for 150 min. The liquid was separated by filtration (Whatman filter 541, pore size 20-25 µm) and analyzed with regard to its chemical oxygen demand (COD).

The reference sample (Example 3(d)) contains the cellulose pulp dispersion and water as defined as Dispersion A above. It was prepared and treated in way as above.

An adsorption isotherm for HPTMAC-CNC adsorption on bleached kraft pulp was created.

The Z-potential, (surface charge) of the cellulose pulps obtained in the Examples above (3(a), 3(b), 3(c) and 3(d)) was measured.

### Method for measurement of the Z-potential:

According to the principle: Streaming potential and Streaming current. By the Z-potential the surface charge of the sample is determined by the following procedure:

Sample (fibre suspension having concentration of 2 g/I) was placed in test cell.

The cellulose fibres were absorbed on a wire cloth in the sample cell, the liquid (water) phase is the electrolyte. The Z-potential were measured by applying an electric field across the dispersion, the instrument (Mütek SZP-06) detects the disturbance of the electrokinetic streams by its two electrodes.The particles in the dispersion with a Z-potential migrated toward the electrode of opposite charge with the velocity proportional to the magnitude of the zeta potential.

The temperature and pH were kept constantaneous during the measurement.

The result is presented in Table 1.

**Table 1. The Z-potential for the cellulose dispersions obtained in Examples 3(a), 3(b) and 3(c) and 3(d).**

| Cellulose pulp dispersion of | Z-potential (mV) |
|---|---|
| Example 3(a) | -12,4 |
| Example 3(b) | +8,1 |
| Example 3(c) | +14,2 |
| Example 3(d) | -28,7 |

### Example 4 - Test sheet preparation

The modified cellulose dispersion obtained in the previous examples was further treated into test sheets. Cellulose dispersions comprising the modified cellulose pulp of concentration 1.6 g/l were prepared by suspending the suspensions according to Example 3 (a), (b) and (c) and also the reference cellulose pulp (Example 3(d)). The modified cellulose pulps of Example 1 and the reference pulp were treated in a semi automated cylinder sheet mold. Paper sheets with surface weight of 80 g/m² were prepared of the cellulose pulps. The sheets were pressed and dried in a rapid sheet dryer (drying temperature was adjusted to 160°C) for 150 seconds to dry content of above 95 % by weight.

The test sheets were tested regarding tensile strength, E-modulus and tensile stretch. Also the grammage (the weight per area) was measured.

The methods for determining these properties are standardised methods with the following identifications:

The grammage were tested and determined according to ISO 536:1995. The tensile propertes, like E-modulus, tensile strength, were determined according to ISO 1924-3:2008.

Determination of thickness, density and specific volume may be performed according to ISO 534:2005.

The results of the above determinations and measurements are presented in Table 2.

**Table 2. Measured paper properties of the test sheets (80g/m²) obtained in Examples 3(a), 3(b), 3(c) and 3(d).**

| | Grammage (g/m²) | Tensile strength index (kNm/kg) | Tensile stretch (%) | E-modulus (GPa) |
|---|---|---|---|---|
| Example 3(a) | 82,43 | 67,21 | 4,35 | 3,09 |
| (1%) | | | | |
| Example 3(b) | 83,23 | 71,13 | 4,41 | 3,28 |
| (3%) | | | | |
| Example 3(c) | 87,94 | 63,11 | 4,33 | 3,00 |
| (5%) | | | | |
| Example 3(d) | 86,56 | 60,19 | 4,27 | 2,84 |

The result in Table 1 may indicate that a fiber network is formed where the tensile strength increase is facilitated by electrostatic neutralisation between the cellulose fibres and added HPTMAC-CNC.

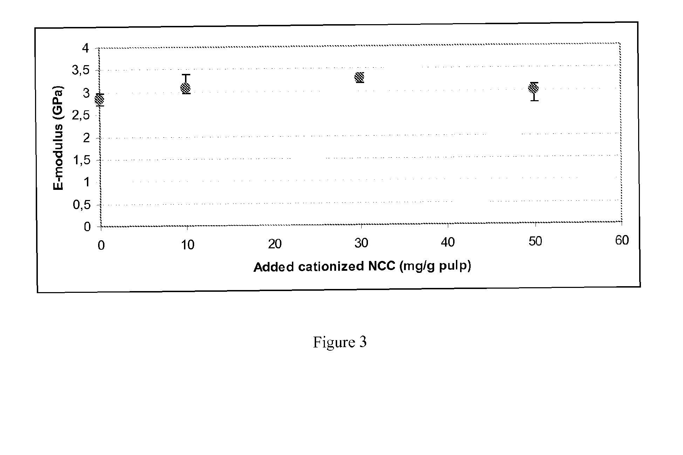

The result is shown in Figure 3.

Having now fully described this invention it will be appreciated by those skilled in the art that the same can be performed within a wide range of equivalent parameters. The variations to the disclosed embodiments can be understood and effected by those skilled in the art practising the claimed invention, from studying the disclosure and appended claims, and without departing from the gist and scope of the invention and without undue experimentation. This application is intended to cover any variations, uses, or adaptations of the invention following, in general, the principles of the invention and including such departures from the present disclusure as come within known or customary practice within the art to which the invention pertains and as may be applied to.

## Claims

**1.** Modified cellulose fibres comprising cationised cellulose nanocrystals adsorbed thereon.

**2.** Modified cellulose fibres according to claim 1 comprising cationised cellulose nanocrystals of formula (I)
CNC-O-M-Z⁺X⁻ [Formula I]
wherein
M represents
linear or branched C₁ -C₁₂ alkyl, optionally substituted by oxo, OH,
-N(R₁ₐ)(R_{1b}), I, Br, linear or branched C₁ -C₆ alkoxy;
R₁ₐ, R_{1b} independently represent H, linear or branched C₁ -C₄ alkyl, optionally substituted with one or more of -Wₐ-R₂, -OH;
R₂ represents linear or branched C₁ -C₄ alkyl;
Wₐ represents O, N, or S;
Z represents -N(R₃ₐ)(R_{3b}), -N(R₃ₐ)(R_{3b})(R_{3c}), N-containing heteroaryl;
R₃ₐ, R_{3b}, R_{3c} independently represent linear, branched C₁ -C₄ alkyl, optionally substituted with one or more selected from oxo, -W-R₄, -OH;
R₃ₐ, R_{3b}, R_{3c} may together form three to seven membered ring, including heteroatoms selected from O, N, S, wherein the N and S may optionally be substituted with linear or branched C₁-C₆ alkyl; -W_{b}R₅, S may be oxidized to S(O)ₖ;
R₄ represents linear or branched C₁ -C₄ alkyl;
R₅ represents linear or branched C₁ -C₄ alkyl;
k represents 1 or 2;
W represents O;
W_{b} represents O, N, or S;
N-containing heteroaryl represents five to fourteen-membered unsaturated heterocyclic groups containing one or more nitrogen, which heterocyclic group is optionally substituted by one or more substituents selected from oxo, hydroxy, cyano, halo, nitro, C₁-C₆ alkyl, C₁-C₆ alkoxy, aryl, aryloxy,
-N(R₆ₐ)R_{6b}, -C(O)R_{6c}, -C(O)OR_{6d}, -C(O)N(R₆ₐ)R_{6b}, -N(R₆ₑ)C(O)R_{6c}, and
-N(R_{6f})S(O)₂R_{6g}.
R₆ₐ to R_{6g} independently represent H, C₁-C₆ alkyl, aryl;
aryl represents phenyl or naphtyl, optionally substituted with OH, halo;
X represents a counter ion; and
CNC denotes the cellulose nanocrystal.

**3.** Modified cellulose fibres according to claim 2
wherein
M represents
linear, branched C₁ -C₆ alkyl, optionally substituted by ;
-(C(O)-(C(R₇ₐ)(R_{7b}))ₙ)-; or
-((C(R₈ₐ)(R_{8b}))-(C(R₈ₐ)(R_{8d}))-(C(R₈ₐ)(R_{8b}))ₙ-(W-(C(R₈ₐ)(R₈ₐ))ₙ)ₘ)-;
R₇ₐ, R_{7b} independently represent H, linear, branched C₁ -C₄ alkyl, optionally substituted with one or more of -Wₐ-R_{7c}, -OH;
R_{7c} represents linear or branched C₁ -C₄ alkyl;
R₈ₐ, R_{8b} independently represent H, linear, branched C₁ -C₄ alkyl, optionally substituted with one or more of -Wₐ-R_{8c}, -OH;
R_{8c} represents linear or branched C₁ -C₄ alkyl;
R_{8d} represents -OH, -NH₂;
W represents O;
Wₐ represents O, N, or S;
n represents 1, 2, 3, 4, 5 or 6; and
m represents 0,1,2,3 or 4.

**4.** Modified cellulose fibres according to claim 2 wherein
M represents
-(C(O)-(C(R₇ₐ)(R_{7b}))ₙ)-;
-((C(R₈ₐ)(R_{8b}))-(C(R₈ₐ)(R_{8d}))-(C(R₈ₐ)(R_{8b}))ₙ-(W-(C(R₈ₐ)(R₈ₐ))ₙ)ₘ)-;
R₇ₐ, R_{7b} independently represent H, linear, branched C₁ -C₄ alkyl, optionally substituted with one or more of -Wₐ-R_{7c}, -OH;
R_{7c} represents linear or branched C₁ -C₄ alkyl;
R₈ₐ, R_{8b} independently represent H, linear, branched C₁ -C₄ alkyl, optionally substituted with one or more of -Wₐ-R_{8c}, -OH;
R_{8c} represents linear or branched C₁ -C₄ alkyl;
R_{8d} represents -OH, -NH₂;
W represents O;
Wₐ represents O, N, or S;
n represents 1, 2, 3, 4, 5 or 6; and
m represents 0,1,2,3 or 4.

**5.** Modified cellulose fibres according to claim 2
wherein
M represents
-(C(O)-(C(R₇ₐ)(R_{7b}))ₙ)-;
R₇ₐ, R_{7b} independently represent H, linear, branched C₁ -C₄ alkyl, optionally substituted with one or more of -Wₐ-R_{7c}, -OH;
R_{7c} represents linear or branched C₁ -C₄ alkyl;
Wₐ represents O, N, or S; and
n represents 1, 2, 3, 4, 5 or 6.

**6.** Modified cellulose fibres according to claim 2
wherein
M represents
-((C(R₈ₐ)(R_{8b}))-(C(R₈ₐ)(R_{8d}))-(C(R₈ₐ)(R_{8b}))ₙ)-(W-(C(R₈ₐ)(R₈ₐ))ₙ)ₘ)-;
R₈ₐ, R_{8b} independently represent H, linear, branched C₁ -C₄ alkyl, optionally substituted with one or more of -Wₐ-R_{8c}, -OH;
R_{8c} represents linear or branched C₁ -C₄ alkyl;
R_{8d} represents -OH, -NH₂;
W represents O;
Wₐ represents O, N, or S;
n represents 1, 2, 3, 4, 5 or 6; and
m represents 0,1,2,3 or 4.

**7.** Modified cellulose fibres according to claim 2 comprising cationised cellulose nanocrystals of formula la
CNC-O-C(O)-(CH₂)-Z⁺X⁻ [Formula la]
wherein
Z represents -N(R₃,)(R_{3b})(R_{3c}), N-containing heteroaryl;
R₃ₐ, R_{3b}, R_{3c} independently represent linear, branched C₁ -C₄ alkyl, optionally substituted with one or more of -W_{b}-R₄, -OH;
R₃ₐ, R_{3b}, R_{3c} may together form C₃-C₇ cyclic ring;
R₄ represents linear or branched C₁ -C₄ alkyl;
W_{b} represents O, N, or S;
X represents a counter ion.
and
CNC denotes the cellulose nanocrystal.

**8.** Modified cellulose fibres according to claim 2 comprising cationised cellulose nanocrystals of formula Ib
CNC-O-(CH₂)-(CHOH)-(CH₂)- Z⁺X⁻ [Formula Ib]
wherein
Z represents -N(R₃ₐ)(R_{3b})(R_{3c}), N-containing heteroaryl;
R₃ₐ, R_{3b}, R_{3c} independently represent linear, branched C₁ -C₄ alkyl, optionally substituted with one or more of -W_{b}-R₄, -OH;
R₃ₐ, R_{3b}, R_{3c} may together form C₃-C₇ cyclic ring;
R₄ represents linear or branched C₁ -C₄ alkyl;
W_{b} represents O, N, or S;
N-containing heteroaryl represent five-to-fourteen-membered unsaturated heterocyclic groups containing one or more nitrogen, which heterocyclic group is optionally substituted by one or more substituents selected from oxo, hydroxy, cyano, halo, nitro, C₁-C₆ alkyl, C₁-C₆ alkoxy, aryl, aryloxy, - N(R₆ₐ)R_{6b}, -C(O)R_{6c}, -C(O)OR_{6d}, -C(O)N(R₆ₐ)R_{6b}, -N(R₆ₑ)C(O)R_{6c}, and
-N(R_{6f})S(O)₂R_{6g}.
R₆ₐ to R_{6g} independently represent H, C₁-C₆ alkyl, or aryl;
aryl represents phenyl, naphtyl;
X represents a counter ion; and
CNC denotes the cellulose nanocrystal.

**9.** Modified cellulose fibres according to any of claims 2 to 8 wherein Z is selected from the group of trimethylammonium, (methyl)(diethyl)ammonium, (dimethyl)(ethyl)ammonium, (dimethyl)(isopropyl)ammonium.

**10.** Modified cellulose fibres according to any of claims 2 to 8 wherein Z is selected from the group of consisting of pyridine, pyrrole, indole, imidazole, quinoline, methyl piperidine, methyl pyrrolidine.

**11.** Modified cellulose fibre according to any of claims 1 and 10 comprising about 1 to 5 % by weight of cationised cellulose pulp;
preferably about 2 to 5 % by weight of cationised cellulose pulp;
preferably about 3 to 4 % by weight of cationised cellulose pulp;
preferably about 2.5 to 3.5 % by weight of cationised cellulose pulp.

**12.** A modified cellulose fibre according to any of claims 1 and 10 having a degree of substitution (DS) of about 0.01 to about 0.2, preferably between about 0.05 to about 0.2.

**13.** Cellulose dispersion comprising the modified cellulose fibres as defined in any of claims 1 to 12.

**14.** Cellulose dispersion according to claim 13 comprising 1 - 50 mg adsorbed cationised cellulose nanocrystals per g cellulose pulp.

**15.** Method for producing the modified cellulose fibres according to claim 1 comprising the following steps
a) preparing cellulose nanocrystal(s);
b) providing cationised cellulose nanocrystals of the cellulose nanocrystals obtained in step a) by reacting the cellulose nanocrystals with a cationisation agent in the presence of a base;
c) mixing the cationised cellulose nanocrystal with cellulose pulp;
d) separating the dispersion medium from the cellulose pulp.

**16.** Method for producing according to claim 15 wherein step b) is performed according to the following reaction: 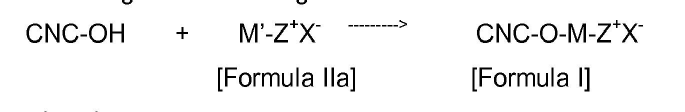 wherein:
M' represents
linear, branched or cyclic ω-epoxy-C₁ -C₁₀ alkyl, optionally substituted by oxo, OH, -N(R₁ₐ)(R_{1b}), halo, linear or branched C₁ -C₆ alkoxy, R₁ₐ, R_{1b} independently represent H, linear or branched C₁ -C₄ alkyl, optionally substituted with one or more of -Wₐ-R₂, -OH;
R₂ represents linear or branched C₁ -C₄ alkyl;
Wₐ represents O, N, or S;
Z represents -N(R₃ₐ)(R_{3b}), -N(R₃ₐ)(R_{3b})(R_{3c}), N-containing heteroaryl;
R₃ₐ, R_{3b}, R_{3c} independently represent linear, branched C₁ -C₄ alkyl, optionally substituted with one or more selected from OXO, -W_{b}-R₄, -OH;
R₃ₐ, R_{3b}, R_{3c} may together form three to seven membered ring, including heteroatoms selected from O, N, S, wherein the N and S may optionally be substituted with linear or branched C₁-C₆ alkyl; -W_{b}-R₅, S may be oxidized to S(O)ₖ
R₄ represents linear or branched C₁ -C₄ alkyl;
R₅ represents linear or branched C₁ -C₄ alkyl;
k represents 1 or 2;
W_{b} represents O, N, or S;
N-containing heteroaryl represents five to fourteen-membered unsaturated heterocyclic groups containing one or more nitrogen, which heterocyclic group is optionally substituted by one or more substituents selected from oxo, hydroxy, cyano, halo, nitro, C₁-C₆ alkyl, C₁-C₆ alkoxy, aryl, aryloxy,
-N(R₆ₐ) R_{6b}, -C(O)R_{6c}, -C(O)OR_{6d}, -C(O)N(R₆ₐ)R_{6b}, -N(R₆ₑ)C(O)R_{6c}, and
-N(R_{6f})S(O)₂R_{6g}.
R₆ₐ to R_{6g} independently represent H, C₁-C₆ alkyl, aryl;
aryl represents phenyl or naphtyl, optionally substituted with hydroxy, halo; and
X represents a counter ion.

**17.** Method for producing according to claim 15 wherein step b) is performed according to the following reaction:
Step 1) 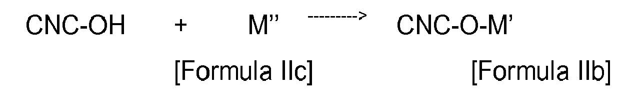
Step 2) 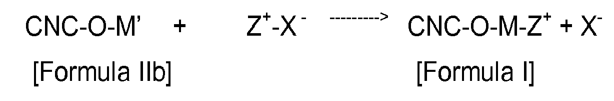
wherein
M" represents linear, branched or cyclic L-1-C(O)-(C₁ -C₁₂ alkyl)-R₉ₐ substituted by optionally substituted by oxo, OH, -N(R₁ₐ)(R_{1b}), I, Br, linear or branched C₁ -C₆ alkoxy,
wherein
L represents a leaving group;
R₁ₐ, R_{1b} represent H, linear or branched C₁ -C₄ alkyl, optionally substituted with one or more of -Wₐ-R₂, -OH;
R₂ represents linear or branched C₁ -C₄ alkyl;
Wₐ represents O, N, and S;
R₉ₐ represents a halo, R_{9b}-C(O)OH;
R_{9b} is selected from linear, branched or cyclic C₁-C₆ alkyl; and
X represents a counter ion.

**17.** Method according to any one of claims 15 and 16 wherein the cellulose pulp in step c) comprises 2- 5 % by weight of cellulose fibres.

**18.** Use of the modified cellulose fibres according to any of claims 1 to 12 or the cellulose dispersion according to any of claims 13 to 14 in a papermaking process.
